# EUROPEAN PATENT APPLICATION

(11) **EP 4 321 924 A1**
(43) Date of publication of application: **14.02.2024**
(21) Application number: 23189893.3
(22) Date of filing: 04.08.2023
(51) Int. Cl.: G02B 27/01, G02C 5/12

(54) **ELECTRONIC DEVICES WITH LIGHT-BLOCKING STRUCTURES**

(30) Priority: 12.08.2022 US 202263397581 P; 24.05.2023 US 202363504134 P; 11.07.2023 US 202318350577
(71) Applicant: Apple Inc., Cupertino CA 95014 (US)
(72) Inventor: TRINCIA, Nicholas R., San Francisco (US); CHEUNG, Michael Y., Santa Clara (US); WRIGHT, Timon A., San Francisco (US)
(74) Representative: Froud, Christopher Andrew

(57) **Abstract**

A head-mounted device (10) may have a housing (26) containing displays (14) that display images a user when the head-mounted device (10) is worn by the user. The head-mounted device may include a light-shielding structure (28) or light seal coupled to the housing (26) and configured to rest on a nasal region of the user. The light-shielding structure (28) may include flexible members and/or fabric members. For example, the flexible members may be elastomeric members (34) having perforations (36) that allow the light-shielding structure (28) to conform to the facial features of the user around the nasal region, while maintaining rigidity. Additionally, the light-shielding structure (28) may block environmental light from entering the eye boxes when the head-mounted device (10) is worn by the user. Rigid or semi-rigid members (43) may be added on or within the light-shielding structure (28) to provide additional rigidity and support as the device (10) is worn by the user.

## Description

This application claims priority to U.S. patent application No. 18/350,577, filed July 11, 2023, U.S. provisional patent application No. 63/504,134, filed May 24, 2023, and U.S. provisional patent application No. 63/397,581, filed August 12, 2022.

### Field

This relates generally to electronic devices, and, more particularly, to electronic devices such as head-mounted devices.

### Background

Electronic devices such as head-mounted devices may have one or more displays for displaying images. The displays may be housed in a head-mounted support structure.

### Summary

A head-mounted device may have a main housing unit, at least one display in the main housing unit, and a nosepiece coupled to the main housing unit. The nosepiece may be a light-shielding structure that includes rigid members, flexible members, and/or fabric members.

The fabric and flexible members may define an outline or shape that conforms to the outline of the nasal region and closes gaps around the nasal region. By doing so, the light-shielding structure may be configured to block environmental light from entering an interior of the head-mounted device when the head-mounted device is worn on a user's head. The rigid members may be coupled to the main housing unit and support the flexible members in keeping a particular shape.

The flexible members may include elastomeric members, such as thermoplastic polyurethane (TPU) members. The elastomeric members may have multiple perforations that allow the elastomer to stretch/deform to a user's nose, while retaining sufficient rigidity to support being wrapped by a low force, high stretch textile or other low force, high stretch material. The rigidity may also allow the elastomeric members to maintain their shape while the head-mounted device is worn, while still conforming to the user's nose. Additional structures, such as structural frames and semi-rigid members may be used to increase the rigidity of the nosepiece. Alternatively or additionally, deformable members, such as service loops or stiffeners may help in adjusting the nosepiece to a user's nose.

### Brief Description of the Drawings

FIG. 1 is a diagram of an illustrative electronic device in accordance with an embodiment.
FIG. 2 is a front view of an illustrative electronic device with a light-shielding structure in accordance with an embodiment.
FIG. 3 is a diagram of an illustrative light-shielding structure having a fabric cover in accordance with an embodiment.
FIGS. 4A and 4B are front views of illustrative elastomeric layers that may be used in a nosepiece in accordance with some embodiments.
FIG. 5 is a front view of an illustrative light-shielding structure having a structural frame in accordance with an embodiment.
FIG. 6 is a side view of an illustrative light-shielding structure having a fabric and elastomer layers in accordance with an embodiment.
FIG. 7 is a front view of an illustrative light-shielding structure having an extension in accordance with an embodiment.
FIG. 8 is a side view of an illustrative light-shielding structure having an embedded service loop in accordance with an embodiment.
FIG. 9 is a side view of an illustrative light-shielding structure having an embedded deformable stiffener in accordance with an embodiment.
FIG. 10A is a side view of an illustrative light-shielding structure having a rolled edge in accordance with an embodiment.
FIG. 10B is a side view of an illustrative light-shielding structure having embedded foam in accordance with an embodiment.
FIG. 10C is a top view of an illustrative light-shielding structure having a crumple zone in accordance with an embodiment.
FIG. 10D is a side view of an illustrative light-shielding structure having a hemmed edge in accordance with an embodiment.
FIG. 10E is a top view of an illustrative light-shielding structure having a foam in corner regions in accordance with an embodiment.
FIG. 10F is a side view of an illustrative light-shielding structure having segmented foam or elastomeric regions in accordance with an embodiment.
FIG. 10G is a side view of an illustrative light-shielding structure having a stiffener and a foam layer in accordance with an embodiment.
FIG. 11 is a front view of an illustrative light-shielding structure having a semi-rigid stiffener in accordance with an embodiment.
FIG. 12 is a perspective view of an illustrative light-shield structure formed from multiple fabric layers in accordance with an embodiment.

### Detailed Description

Head-mounted devices include head-mounted support structures that allow the devices to be worn on the heads of users. The head-mounted support structures may include device housings for housing components such as displays that are used for presenting a user with visual content. Head-mounted devices may also include a light-shielding nosepiece that rests on the nose of the user. The light-shielding nosepiece may include an elastomeric layer with perforations and fabric that covers the elastomeric layer. The elastomeric layer with the perforations may allow the light-shielding nosepiece to conform to the user's nose while the device is worn, while maintaining enough rigidity to be wrapped by a low force, high stretch textile or other low force, high stretch material. Additional structures, such as rigid structures or semi-rigid structures, may be included in the light-shielding nosepiece to provide additional support for the device while it is worn.

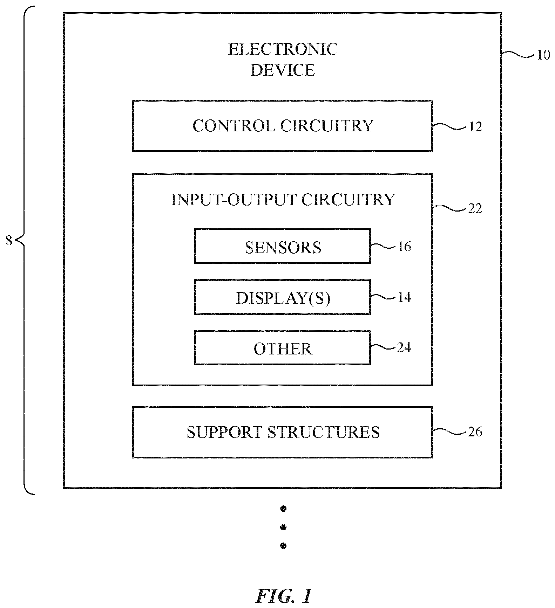

A schematic diagram of an illustrative system having an electronic device with a light-shielding nosepiece is shown in FIG. 1. As shown in FIG. 1, system 8 may include one or more electronic devices such as electronic device 10. The electronic devices of system 8 may include computers, cellular telephones, head-mounted devices, wristwatch devices, and other electronic devices. Configurations in which electronic device 10 is a head-mounted device are sometimes described herein as an example.

As shown in FIG. 1, electronic devices such as electronic device 10 may have control circuitry 12. Control circuitry 12 may include storage and processing circuitry for controlling the operation of device 10. Circuitry 12 may include storage such as hard disk drive storage, nonvolatile memory (e.g., electrically-programmable-read-only memory configured to form a solid-state drive), volatile memory (e.g., static or dynamic randomaccess-memory), etc. Processing circuitry in control circuitry 12 may be based on one or more microprocessors, microcontrollers, digital signal processors, baseband processors, power management units, audio chips, graphics processing units, application specific integrated circuits, and other integrated circuits. Software code may be stored on storage in circuitry 12 and run on processing circuitry in circuitry 12 to implement control operations for device 10 (e.g., data gathering operations, operations involved in processing three-dimensional facial image data, operations involving the adjustment of components using control signals, etc.). Control circuitry 12 may include wired and wireless communications circuitry. For example, control circuitry 12 may include radio-frequency transceiver circuitry such as cellular telephone transceiver circuitry, wireless local area network (WiFi^{®}) transceiver circuitry, millimeter wave transceiver circuitry, and/or other wireless communications circuitry.

During operation, the communications circuitry of the devices in system 8 (e.g., the communications circuitry of control circuitry 12 of device 10), may be used to support communication between the electronic devices. For example, one electronic device may transmit video and/or audio data to another electronic device in system 8. Electronic devices in system 8 may use wired and/or wireless communications circuitry to communicate through one or more communications networks (e.g., the internet, local area networks, etc.). The communications circuitry may be used to allow data to be received by device 10 from external equipment (e.g., a tethered computer, a portable device such as a handheld device or laptop computer, online computing equipment such as a remote server or other remote computing equipment, or other electrical equipment) and/or to provide data to external equipment.

Device 10 may include input-output devices 22. Input-output devices 22 may be used to allow a user to provide device 10 with user input. Input-output devices 22 may also be used to gather information on the environment in which device 10 is operating. Output components in devices 22 may allow device 10 to provide a user with output and may be used to communicate with external electrical equipment.

As shown in FIG. 1, input-output devices 22 may include one or more displays such as display 14. In some configurations, display 14 of device 10 includes left and right display panels (sometimes referred to as left and right portions of display 14 and/or left and right displays) that are in alignment with the user's left and right eyes and are viewable through left and right lens assemblies, respectively. In other configurations, display 14 includes a single display panel that extends across both eyes.

Display 14 may be used to display images. The visual content that is displayed on display 14 may be viewed by a user of device 10. Displays in device 10 such as display 14 may be organic light-emitting diode displays or other displays based on arrays of light-emitting diodes, liquid crystal displays, liquid-crystal-on-silicon displays, projectors or displays based on projecting light beams on a surface directly or indirectly through specialized optics (e.g., digital micromirror devices), electrophoretic displays, plasma displays, electrowetting displays, microLED displays, or any other suitable displays.

Display 14 may present computer-generated content such as virtual reality content and mixed reality content to a user. Virtual reality content may be displayed in the absence of real-world content. Mixed reality content, which may sometimes be referred to as augmented reality content, may include computer-generated images that are overlaid on real-world images. The real-world images may be captured by a camera (e.g., a forward-facing camera) and merged with overlaid computer-generated content or an optical coupling system may be used to allow computer-generated content to be overlaid on top of real-world images. As an example, a pair of mixed reality glasses or other augmented reality head-mounted display may include a display device that provides images to a user through a beam splitter, prism, holographic coupler, or other optical coupler. Configurations in which display 14 is used to display virtual reality content to a user through lenses are described herein as an example.

Input-output devices 22 may include sensors 16. Sensors 16 may include, for example, three-dimensional sensors (e.g., three-dimensional image sensors such as structured light sensors that emit beams of light and that use two-dimensional digital image sensors to gather image data for three-dimensional images from light spots that are produced when a target is illuminated by the beams of light, binocular three-dimensional image sensors that gather three-dimensional images using two or more cameras in a binocular imaging arrangement, three-dimensional lidar (light detection and ranging) sensors, three-dimensional radio-frequency sensors, or other sensors that gather three-dimensional image data), cameras (e.g., infrared and/or visible digital image sensors), gaze tracking sensors (e.g., a gaze tracking system based on an image sensor and, if desired, a light source that emits one or more beams of light that are tracked using the image sensor after reflecting from a user's eyes), touch sensors, buttons, force sensors, sensors such as contact sensors based on switches, gas sensors, pressure sensors, moisture sensors, magnetic sensors, audio sensors (microphones), ambient light sensors, microphones for gathering voice commands and other audio input, sensors that are configured to gather information on motion, position, and/or orientation (e.g., accelerometers, gyroscopes, compasses, and/or inertial measurement units that include all of these sensors or a subset of one or two of these sensors), fingerprint sensors and other biometric sensors, optical position sensors (optical encoders), and/or other position sensors such as linear position sensors, and/or other sensors.

User input and other information may be gathered using sensors and other input devices in input-output devices 22. If desired, input-output devices 22 may include other devices 24 such as haptic output devices (e.g., vibrating components), light-emitting diodes and other light sources, speakers such as ear speakers for producing audio output, and other electrical components. Device 10 may include circuits for receiving wireless power, circuits for transmitting power wirelessly to other devices, batteries and other energy storage devices (e.g., capacitors), joysticks, buttons, and/or other components.

Electronic device 10 may have housing structures (e.g., housing walls, straps, etc.), as shown by illustrative support structures 26 of FIG. 1. In configurations in which electronic device 10 is a head-mounted device (e.g., a pair of glasses, goggles, a helmet, a hat, a headband, etc.), support structures 26 may include head-mounted support structures (e.g., a helmet housing, head straps, temples in a pair of eyeglasses, goggle housing structures, and/or other head-mounted structures). The head-mounted support structures may be configured to be worn on a head of a user during operation of device 10 and may support display(s) 14, sensors 16, other components 24, other input-output devices 22, and control circuitry 12.

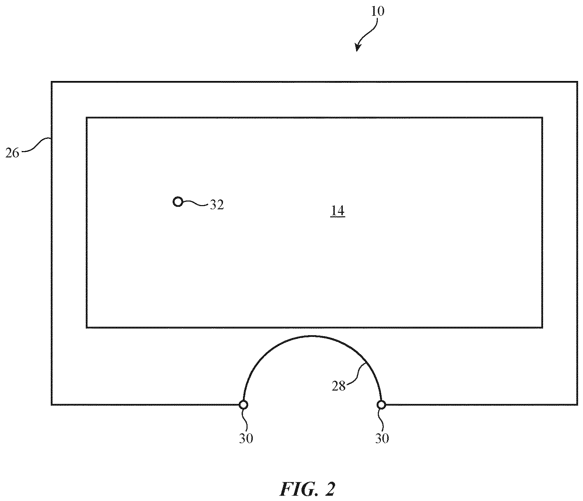

In some embodiments, support structures 26 may include a light-shielding nosepiece. The light-shielding nosepiece may be attached to support structures 26, such as a main housing portion of electronic device 10, and may rest on the user's nose while device 10 is worn. The light-shielding nosepiece may be flexible, to allow the nosepiece to conform to the user's nose, while retaining enough rigidity to support device 10 on the user's face while it is being worn (i.e., to maintain its shape on the user's nose while the device is worn) and to be wrapped by a fabric or other material. If desired, the light-shielding nosepiece may also include stiffeners or other components that help maintain the nosepiece on the user's nose to prevent light from reaching the user's eyes. An example of an illustrative electronic device having a nosepiece is shown in FIG. 2.

As shown in FIG. 2, head-mounted device 10 may include support structures 26, which may include a head-mounted housing (sometimes referred to as a main housing, main housing unit, head-mounted support structure, etc.). The housing may have walls or other structures that separate an interior housing region from an exterior region surrounding the housing. For example, the housing may have walls formed from polymer, glass, metal, and/or other materials. Electrical and optical components may be mounted in the housing. These components may include components such as integrated circuits, sensors, control circuitry, input-output devices, etc.

To present a user with images for viewing from eye boxes (e.g., eye boxes in which the user's eyes are located when device 10 is being worn on the user's head), device 10 may include displays and lenses. These components may be mounted in optical modules or other supporting structure in the housing to form respective left and right optical systems. There may be, for example, a left display for presenting an image through a left lens to a user's left eye in a left eye box and a right display for presenting an image through a right lens to a user's right eye in a right eye box.

If desired, the housing may have forward-facing components such as cameras and other sensors on a front side for gathering sensor measurements and other input and may have a soft cushion on an opposing rear side of the housing. The rear side of the housing may have openings that allow the user to view images (image light 32) from the left and right optical systems (e.g., when the rear side of the housing is resting on the user's head).

If desired, device 10 may have an adjustable strap or headband, and if desired, may have other structures (e.g., an over-the-head strap) to help hold the housing on the user's head.

As shown in FIG. 2, when worn by the user, device 10 may include a nosepiece, such as nosepiece 28 that rests on the nasal region the user's head (e.g., on the user's nose). In particular, nosepiece 28 (sometimes referred to as a light-shielding structure or a light-shielding nosepiece herein) may serve as an extension of the housing that rests on the user's nose and bridges between the opposing cheeks of the user. If desired, nosepiece 28 may be attached to the housing and/or may include one or more members formed from a portion of the housing. In some embodiments, nosepiece 28 may be a portion of a light seal or attached to a light seal that extends around some or all of a periphery of the housing (e.g., the light seal is attached to the housing around the periphery). When device 10 is in use, the light seal may compress against the user's face and prevent interference from ambient light. In general, however, nosepiece 28 may be attached to the housing in any desired manner.

Nosepiece 28 may be configured as a light-shielding structure and may therefore be sometimes referred to as light-shielding structure 28 or light-shielding nosepiece 28. As an example, it may be desirable to enhance the viewing experience of the user by blocking external environmental light from entering the interior of device 10 (e.g., from entering the eye boxes) when device 10 is worn by the user. Nosepiece 28 may conform to the facial topology of the user around the user's nose and block light from entering the eye boxes. In some illustrative configurations, nosepiece 28 may be adjustable to conform to varying facial topologies of different users (e.g., portions of nosepiece 28 may deform differently based on the nose shapes of the users).

Nosepiece 28 may be mounted to a housing portion of electronic device 10, such as head-mounted support structures 26, at mounting points 30. The housing may include a housing frame that runs along the periphery of device 10. If desired, the housing frame may be overlapped by a cushion member on the rear side of the housing facing the user. As an example, the cushion member may include foam structures or other soft compressible structures affixed to the housing frame. A fabric may overlap and extend over the housing frame and/or the cushion member on the rear side of the housing. If desired, the fabric may enclose only the cushion member, and the fabric-enclosed cushion member may be removably coupled to the housing frame.

Mounting points 30 may be located at a bottom portion of the housing frame (e.g., a bottom portion of support structures 26). As examples, mounting points 30 may include coupling mechanisms such as magnets, adhesive, hinges, or any other suitable coupling mechanisms.

In the example of FIG. 2, nosepiece 28 is attached to support structures 26 such that nosepiece 28 extends into a portion of support structures 26. This is merely illustrative. If desired, the housing frame, a cushion member, and/or fabric may split into multiple portions to surround nosepiece 28. As an example, a fabric-enclosed cushion member may run in front of nosepiece 28, and a housing frame may run behind nosepiece 28. In general, the housing portions, cushion member, and/or fabric may define an opening in which nosepiece 28 is disposed.

In some illustrative examples, nosepiece 28 may be removably coupled (via magnetics) to the housing frame or other portions of the housing. In some illustrative examples, a portion of nosepiece 28 may form an integral portion of the housing frame and/or may not be removable from the housing.

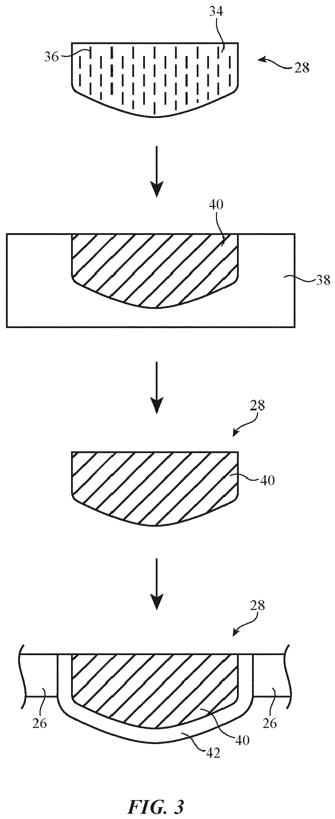

Support structures 26 (e.g., housing frames) and nosepiece 28 (along with other desired structures) may define the periphery of the eye boxes of device 10 at which the user's eyes are located. Components, such as displays, lenses, sensors, etc., may overlap and/or be located within the eye boxes of device 10, and may be enclosed by and/or mounted to support structures 26 and/or nosepiece 28. As illustratively shown in FIG. 2, display 14 emit image light 32 through a lens to an eye box. Nosepiece 28 may be configured to block environmental light from an exterior of device 10 from entering the eye box and interfering with image light 24. An example of a nosepiece that may be used in device 10 is shown in FIG. 3.

As shown in FIG. 3, a nosepiece, such as nosepiece 28, may include elastomer 34 (also referred to as elastomeric layer 34 herein). Elastomer 34 may be any desired elastomeric material, such as thermoplastic polyurethane (TPU), nitrile butadiene rubber (NBR), or silicone (such as a low-durometer silicone). Elastomer 34 may have a thickness of greater than 0.1 mm, greater than 0.25 mm, greater than 0.5 mm, about 1 mm, less than 2 mm, less than 5 mm, etc.

In some embodiments, elastomer 34 may include perforations 36. Perforations 36 may allow elastomer 34 to bend to accommodate a user's nose (i.e., in the horizontal left and right directions of FIG. 3), while maintaining sufficient rigidity (i.e., in the vertical up and down directions of FIG. 3) to support device 10 on the user's nose. The rigidity of elastomer 34 may also allow elastomer 34 to be wrapped by fabric 38 or other low force, high stretch material.

Perforations 36 may be formed in any desired pattern. In the example of FIG. 3, perforations 36 are slits formed as an array of perforations across the entire surface of elastomer 34. Perforations 36 may be formed in a brick pattern, as in FIG. 3, or may be formed in any other desired pattern. Additionally, any desired number of perforations 36 may be formed in elastomer 34, such as at least 1 perforation, at least 5 perforations, or any other desired number of perforations. Perforations 36 may extend entirely through elastomer 34, or may extend partially through elastomer 34.

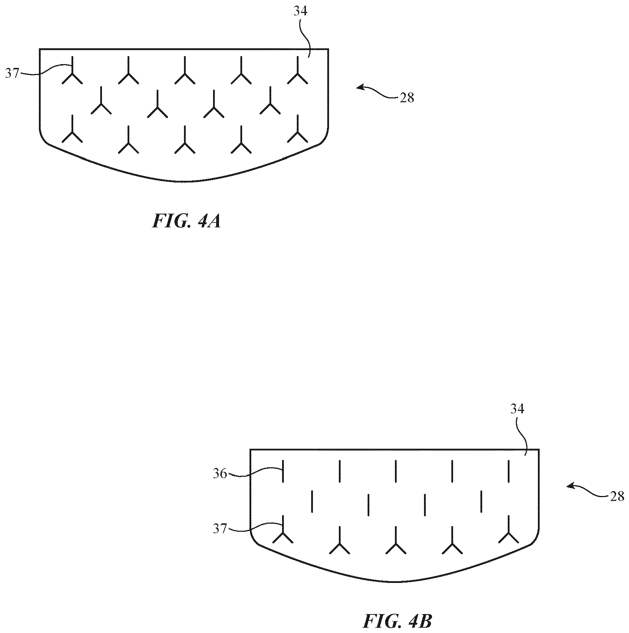

The use of slits formed in a brick pattern, as shown in FIG. 3, are merely illustrative. Other illustrative examples of perforations in elastomer 34 are shown in FIGS. 4A and 4B.

As shown in FIG. 4A, elastomer 34 may include three-part openings 37. Three-part openings 37 may be arranged in a brick pattern, similar to the slits of FIG. 3. Alternatively, three-part openings 37 may be formed in any other suitable pattern.

Three-part openings 37 may allow elastomer 34 to stretch/deform in two or more axes. As a result, elastomer 34 (and therefore nosepiece 28) may contour to a user's nose more accurately (e.g., elastomer 34 may be able to deform to a user's nose and therefore adapt to the shape of the user's nose). In this way, elastomer 34 may seal to the user's nose and prevent light from interfering with displays in the head-mounted device.

Different types of perforations may be used in a single elastomeric member. For example, as shown in FIG. 4B, slits 36 may be formed on a top half of elastomer 34, while three-part openings 37 may be formed on a bottom half of elastomer 34. In some embodiments, using three-part openings 37 at the bottom portion of elastomer 34 may allow elastomer 34 to stretch more (e.g., along two or more axes) at the user's nose. However, the example of an upper half of elastomer 34 having slits 36 and the bottom half having three-part openings 37 is merely illustrative. In general, slits 36 and three-part openings (or other suitable perforations) may be formed anywhere on elastomer 34, and may fill any suitable portion of elastomer 34 to allow elastomer 34 to conform to a user's nose.

Elastomer 34 may have a shape that generally conforms to a user's nose, such as a chevron shape, as shown in FIG. 3, or any other desired shape, such as a rounded shape, or a rectangular shape.

As shown in FIG. 3, elastomer 34 may be covered by fabric 38. In particular, fabric 38 may overlap and/or encapsulate elastomer 34 in region 40. Fabric region 40 may have the same shape as elastomer 34, as shown in FIG. 3, or may have a different shape than elastomer 34. Fabric members 40 and/or 38 may serve as a light-shielding member or layer for light-shielding structure 28. In particular, illustrative configurations in which fabric 40/38 is a fabric cover (sometimes referred to as a fabric cover layer or a cover layer) are described herein as an illustrative example. To serve light-shielding functions, the fabric cover may be formed from an opaque or light-shielding material (e.g., black yarn) or may formed from an underlying material coated with an opaque or light-shielding material (e.g., black dye or ink). As examples, the fabric cover may be formed any suitable type of fabric such as knit fabric, woven fabric, braided fabric, etc.

Fabric 40 may be tented over elastomer 34. Tenting of the fabric cover over an underlying structure may be achieved by the underlying structure contacting or otherwise supporting the fabric cover at one or more points or areas of support as the fabric cover extends over one or more sides of the underlying structure. The tenting of the fabric cover over the underlying structure may cause the fabric cover to follow the general outline of the underlying structure, especially around the areas of support. If desired, differences in the outlines of the fabric cover and of the underlying structure may exist, especially in some regions away from the areas of support, thereby causing some portions of the fabric cover to be suspended in air and therefore readily deflectable. As an example, the fabric cover may be deflectable to the boundary of the underlying structure (or even beyond the boundary of the underlying structure if the boundary is defined by a flexible or deformable member).

The rigidity of elastomer 34, which is preserved in the vertical direction by perforations 36, may allow elastomer 34 to be wrapped by fabric 40 (or other low force, high stretch textile, or other low force, high stretch material) without deforming. In other words, elastomer 34 may be rigid enough to maintain its shape while fabric 40 is applied to/wrapped around elastomer 34 (as well as to maintain its shape when the device is worn by a user), but flexible enough that it can conform to a user's nose.

In such a way, the fabric cover may have a three-dimensional shape (based on an outline of the underlying structure) that includes portions (e.g., directly supported by the underlying structure) that are more defined and portions (e.g., not directly supported by the underlying structure, suspended in air, etc.) that are less defined, and more flexible or yielding. These less-defined portions (e.g., a yielding fabric surface) may help form flexible boundaries such as those for an opening configured to receive a user's nose.

As a particular illustrative example, the underlying structure may have surfaces that define an opening for accommodating a user's nose. The surfaces may be surrounded by peripheral edges. The fabric cover may be tented over the underlying structure such that the fabric cover is directly supported by the underlying structure along one or more of the peripheral edges of the underlying structure and may be suspended in air around the opening, thereby providing a fabric surface that is deflectable by the user's nose. This may help with improving user comfort as well as providing a more conformal fit when the light shielding structure rests on the user's nose.

Regardless of the shape of fabric region 40, fabric region 40 (and/or elastomer 34) may be bonded to support structures 26 (such as a housing frame) using adhesive 42. However, the use of adhesive 42 is merely illustrative. Fabric 40 and/or elastomer 34 may be formed integrally with support structures 26, or may be attached to support structures 26 using any desired attachment mechanism.

Although nosepiece 28 is shown as including both elastomer 34 and fabric 40, this is merely illustrative. If desired, nosepiece 28 may include elastomer 34 without an overlapping fabric layer. In this case, another layer, such as a polymer or rubber, may overlap elastomer 34, or elastomer 34 may directly contact a user's nose as they wear device 10. Alternatively, nosepiece 28 may include fabric 40 without elastomer 34, if desired. In this case, fabric 40 may be a flat knit fabric to provide sufficient stretching over a user's nose, while providing enough support for device 10.

Although fabric 38/40 is described as fabric, this is merely illustrative. In general, fabric 38/40 may be any low force, high stretch material, such as a low force, high stretch textile.

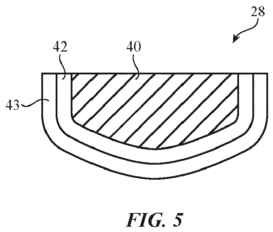

In some embodiments, although elastomer 34 may have rigidity to support device 10 on a user's nose (i.e., in the vertical direction of FIG. 3) and to be wrapped by fabric, it may be desirable to add additional rigid or semi-rigid structures to a nosepiece. An illustrative example of a nosepiece having a rigid structure is shown in FIG. 5.

As shown in FIG. 5, nosepiece 28 may include fabric 40 (which may cover an elastomeric layer, such as elastomer 34) and adhesive 42, which in turn may attach fabric 40 to structural frame 43. Structural frame 43 may be a plastic frame, as an example. Structural frame 43 may provide additional rigidity to ensure that nosepiece 28 retains its shape and support when worn by a user.

Although FIG. 5 shows the use of adhesive 42, this is merely illustrative. Adhesive 42 may be omitted, if desired. In some examples, elastomer 34 may be co-molded to structural frame 43. Alternatively, elastomer 34 may be fit into a recessed portion of structural frame 43 or otherwise attached to structural frame 43.

Additionally, although FIG. 5 shows structural frame 43 on three sides of fabric 40/elastomer 34, this is merely illustrative. Structural frame 43 may be attached to one side (e.g., the bottom side) of fabric 40/elastomer 34 or any other desired number of sides.

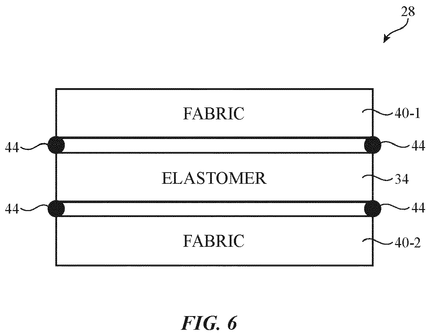

Regardless of the attachment of structural frame 43 to elastomer 34 and/or fabric 40, fabric 40 may extend over all or some of both frame 43 and/or elastomer 34. An example of a stack up of nosepiece 28 is shown in FIG. 6.

As shown in FIG. 6, nosepiece 28 may include fabric 40, which is shown as having fabric portions 40-1 and 40-2, on either side of elastomer 34. If desired, fabric 40 may be bonded to elastomer 34 at a periphery of elastomer 34, which is shown in FIG. 6 as points 44. For example, fabric 40 may be bonded to elastomer 34 around a periphery (such as an entire periphery or a portion of the periphery) of the elastomer layer. Fabric 40 may be bonded to elastomer 34 using an adhesive or other desired mounting mechanism.

In some cases, it may be desirable to allow elastomer 34 to move to a greater extent, and therefore leave elastomer 34 un-bonded from fabric 40. For example, elastomer 34 may be fully surrounded fabric 40 and float within the fabric. In some embodiments portions of fabric 40 may be bonded directly to each other, rather than to elastomer 34. In this way, elastomer 34 may float within fabric 40, which may allow 34 to move more freely.

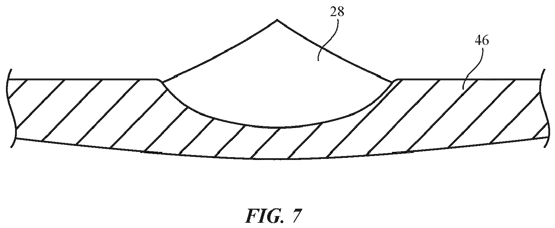

Because nosepiece 28 is designed to block light from reaching the eye boxes of a user wearing device 10, it may be desirable to ensure a tight fit between nosepiece 28 and the user's nose and a similarly tight fit between nosepiece 28 and device 10. An example of an extension piece that may allow for nosepiece 28 to fit tightly with device 10 is shown in FIG. 7.

As shown in FIG. 7, extension piece 46 may be added below nosepiece 28. In particular, if a user's nose bridge protrudes only a small amount, nosepiece 28 may not reach the user's nose. Therefore, extension piece 46 may be attached between support structures of device 10, such as support structures 26, and nosepiece 28. Extension piece 28 may be formed from fabric, foam, plastic, and/or any other desired material. In some cases, extension piece 28 may allow nosepiece 28 to align with other light-blocking structures in device 10, such as a foam member that fits against the user's face. In this way, light may be prevented from reaching the user's eye boxes and interfering with the user's visibility of a display in device 10.

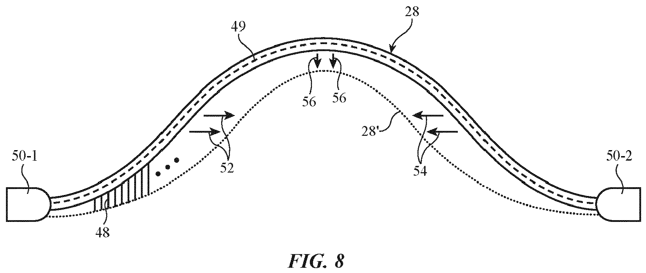

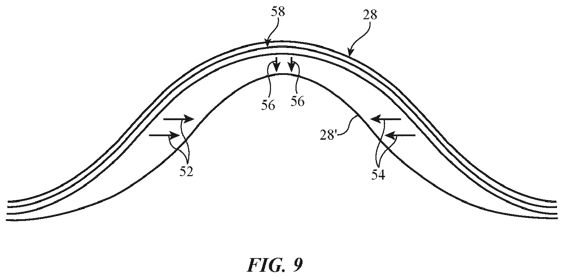

In addition or as an alternative to extension piece 46, it may be desirable to ensure a close fit to a user's nose to prevent light from entering the user's eye boxes. Examples of nosepieces that have additional structures to improve the fit to a user's nose are shown in FIGS. 8 and 9.

As shown in FIG. 8, service loop 49 may be included within nosepiece 28. In particular, service loop 49 (and other portions of nosepiece 28, if desired) may be attached to supports 50-1 and 50-2. Service loop 49 may be tightened and loosened as desired to conform nosepiece 28 to the nose of a user. For example, as shown in FIG. 7, service loop 49 may be tightened to move nosepiece 28 to position 28' by moving nosepiece 28 downward in direction 56, right in direction 52, and left in direction 54 toward to the nose of the user. In this way, service loop 49 may allow nosepiece 28 to fit more securely to the user's nose, preventing light from entering the user's eye boxes through gaps between nosepiece 28 and the nose.

Alternatively or additionally, nosepiece 28 may include foam 48. Foam 48 may fill a gap between nosepiece 28 and the user's nose, and may be compressible to allow for a secure fit between nosepiece 28 and the nose. Foam 48 may directly contact the nose of the user (e.g., may be on a surface of a fabric layer, such as fabric 40), as shown in FIG. 8, may be embedded within nosepiece 28 (e.g., covered by fabric, such as fabric 40), or may otherwise be attached to nosepiece 28.

Instead of service loop 49, a deformable stiffener, such as deformable stiffener 58, may be incorporated into nosepiece 28. As shown in FIG. 9, deformable stiffener 58 may allow for nosepiece 28 to be adjusted in directions 52, 54, and 56 toward the nose of the user to conform nosepiece 28 to the user's nose at position 28'. Deformable stiffener 58 may be formed within nosepiece 28 (i.e., may be covered by fabric), as shown in FIG. 9, or may be formed on a surface of the fabric (e.g., an inner or outer surface of fabric 40). Although not shown in FIG. 9, a gap-filling foam, such as foam 48 of FIG. 8, may be incorporated in or on nosepiece 28 in addition to deformable stiffener 58.

In some embodiments, to ensure that nosepiece 28 is tightly sealed to the nose of a user, internal components of device 10, such as fans, may be used to move air toward nosepiece 28, thereby sealing nosepiece 28 around the user's nose.

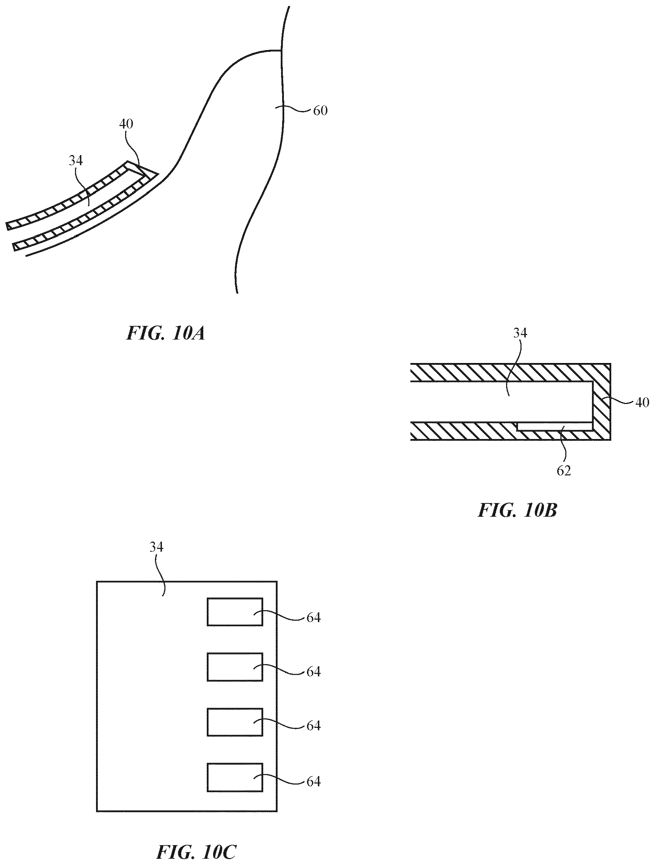

In addition to improving the fit of nosepiece 28 to prevent light from entering the eye boxes of the user, it may also be desirable to incorporate layers into nosepiece 28 that improve the comfort for the user. Examples of various modifications that may be made to nosepiece 28 to improve user comfort are shown in FIGS. 10A-10G.

As shown in FIG. 10A, a nosepiece, which includes elastomer 34 and fabric 40 (such as nosepiece 28) may have a rolled edge and may approach the user's nose at a shallow angle of contact to conform to a curved portion of nose 60. The rolled edge may prevent elastomer 34 from digging into the user's skin on nose 60, while the shallower angle of contact may allow the nosepiece to move up the user's nose rather than hitting the user's nose directly. Therefore, by having a rolled edge and/or a shallower angle of contact, nosepiece 28 may improve comfort for a user of device 10.

Alternatively or additionally, a nosepiece may include foam, such as foam 62, between some or all of elastomer 34 and fabric 40, as shown in FIG. 10B. In particular, foam 62 may be at an edge portion of the nosepiece that contacts the user's nose, and therefore prevent elastomer 34 from hurting the user's nose or reducing discomfort as the nosepiece pushes against the nose.

In some examples, it may be desirable to have a series of openings in elastomer 34 that are either unfilled or filled with different material, such as foam. For example, in FIG. 10C, openings 64 may be provided in a portion of the nosepiece that will contact the user's nose. Openings 64 may be through openings, partial openings, may be filled with other material, such as foam, or may otherwise be more flexible than the surrounding regions of elastomer 34. As the nosepiece pushes against the user's nose, openings 64 may crumple, thereby preventing or reducing discomfort to the user.

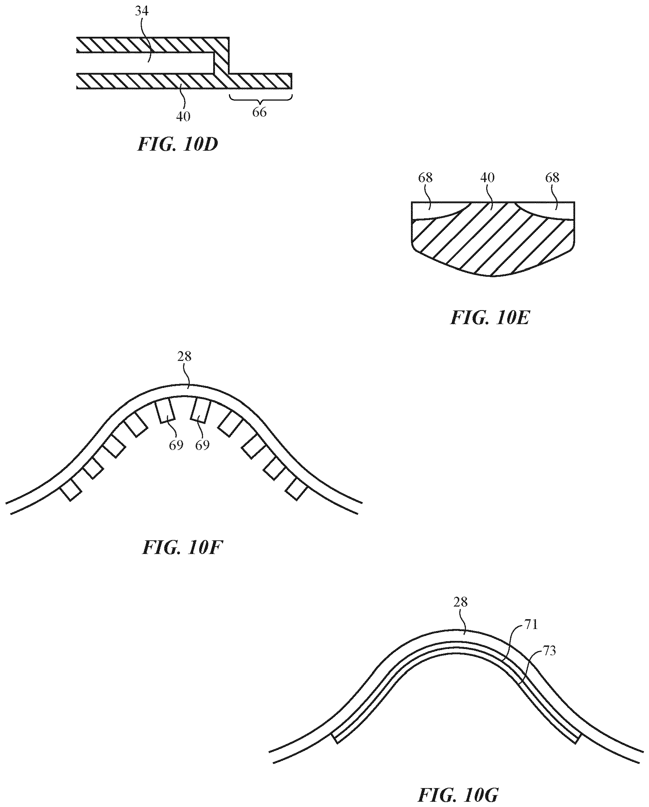

If desired, a portion of fabric may be extended from the portion that contacts the user's nose to provide an additional buffer between the nose and elastomer 34. As shown in FIG. 10D, fabric portion 66 may extend from fabric 40. When worn by a user, fabric portion 66 may contact the nose of the user first, and therefore increase the amount of fabric between the nose and elastomer 34, which may improve user comfort. In some examples, fabric portion 66 may be a hemmed edge of fabric 40.

If desired, at least some portions of elastomer 34 that would otherwise contact the user's nose may be cut and replaced by more flexible material, such as foam. As shown in FIG. 10E, foam portions 68 may replace portions of elastomer 34 that would otherwise contact the user's nose. Although fabric 40 does not cover foam portions 68 in FIG. 10E, fabric 40 may overlap foam portions 68, if desired.

In addition to, or instead of, the modifications of FIGS. 10A-10E, in which an edge portion of a nosepiece is modified to prevent the elastomer from providing discomfort to a user's nose, a bottom portion of the nosepiece may be modified. As shown in FIG. 10F, segmented material 69 may be added to a bottom surface of nosepiece 28. For example, segmented material 69 may contact the top of the user's nose (i.e., the nose bridge), and prevent nosepiece 28 from directly contacting the nose and causing discomfort. Material 69 may be foam or may be elastomer flaps.

Although FIG. 10F shows material 69 as being segmented and non-overlapping, material 69 may be segmented and overlapping, or may be one connected piece of material, if desired. For example, in FIG. 10G, foam 73 may be provided between nosepiece 28 and the user's nose while device 10 is worn. If desired, optional deformable stiffener 71 may be provided on the bottom surface of nosepiece 28 to improve the fit of nosepiece 28 on the user's nose. If stiffener 71 is included, foam 73 may also prevent stiffener 71 from directly contacting the user's nose and providing discomfort.

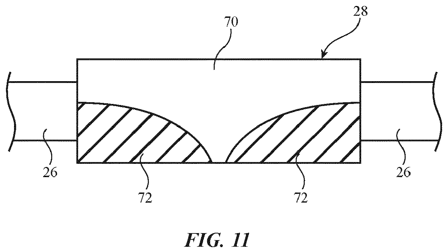

All of the examples in FIGS. 10A-10G are merely illustrative examples of improving user comfort while ensuring that a nosepiece fits tightly to the user's nose. The examples are not limiting and may be implemented individually or together in any combination. Regardless of whether any structures in FIGS. 10A-10G are used, it may be desirable to strengthen a portion of nosepiece 28. Although the use of a structural frame was described in connection with FIG. 5, such a frame may add unnecessary bulk or add too much rigidity to nosepiece 28 in some cases. Therefore, a semi-rigid member may be used. An example of using a semi-rigid member on a nosepiece is shown in FIG. 11.

As shown in FIG. 11, a nosepiece, such as nosepiece 28, may include portions 70 and 72. Portion 70 may include an elastomer, such as elastomer 34, and/or a fabric, such as fabric 40. Portion 72 may be coupled to portion 70 and may include a semi-rigid member. In particular, the semi-rigid member may be formed on a bottom portion of nosepiece 28 (i.e., toward the bottom of the user's nose when device 10 is worn), and may provide additional rigidity to nosepiece 28. The semi-rigid members may be formed from any desired material, such as rubber or plastic. In this way, nosepiece 28 may remain sufficiently flexible to conform to the shape of a user's nose, while retaining its shape when after it has been conformed to the shape of the nose and the device is being worn by the user.

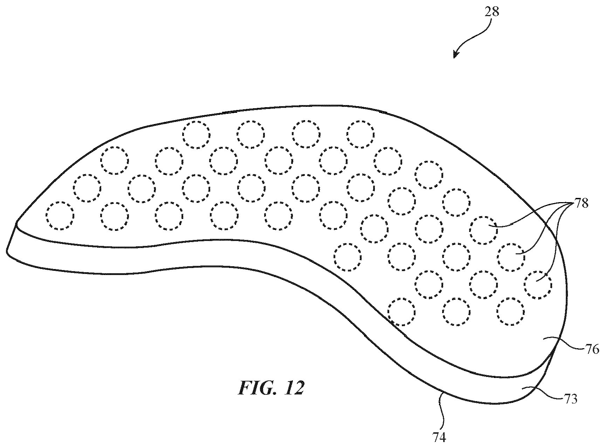

Although nosepieces, such as nosepiece 28, have been described as including an elastomeric member, such as elastomer 34, this is merely illustrative. In some embodiments, elastomer 34 may be omitted. For example, in the example of FIG. 3, elastomer 34 may be omitted or may be replaced with thick fabric, which may be surrounded by thinner, more stretchy fabric. In the illustrative example of FIG. 12, nosepiece 28 may include fabric 73 that may be formed from fabric layers 74 and 76. Fabric layers 74 and 76 may be bonded at points 78 (e.g., an array of points across fabric layers 74 and 76), such as with laser welding, ultrasonic welding, or adhesive. The use of two (or more) fabric layers 74 and 76 may make fabric 73 thicker, thereby providing more support in the region of a user's nose. In general, however, fabric 73 may include any suitable number of fabric layers.

In accordance with an aspect of the invention, a head-mounted device is provided that includes a housing, a display in the housing and a light seal coupled to the housing, the light seal includes an elastomeric layer with multiple perforations and fabric that covers the elastomeric layer.

Preferably, the elastomeric layer includes thermoplastic polyurethane.

Preferably, the multiple perforations are staggered in a brick pattern across the elastomeric layer.

Preferably, the multiple perforations include slits.

Preferably, the multiple perforations include three-part openings.

Preferably, the multiple perforations include slits and three-part openings.

Preferably, the elastomeric layer has a periphery, and the fabric is coupled to the elastomeric layer at the periphery.

Preferably, the fabric surrounds the elastomeric layer without attaching to the elastomeric layer.

Preferably, the light seal further includes a structural frame that is coupled to the elastomeric layer and to the fabric.

Preferably, the light seal further includes a semi-rigid member that overlaps a portion of the fabric and supports the elastomeric layer.

Preferably, the light seal further includes a service loop, the fabric covers the service loop, and the service loop is adjustable to adjust the light seal.

Preferably, the light seal further includes a deformable stiffener, and the deformable stiffener is adjustable to adjust the light seal.

Preferably, the deformable stiffener is covered by the fabric.

Preferably, the deformable stiffener is on a surface of the fabric.

Preferably, the light seal further includes foam interposed between the elastomeric layer and the fabric.

Preferably, the light seal further includes foam on a surface of the fabric.

Preferably, the foam is segmented across the surface of the fabric.

Preferably, the light seal further includes a deformable stiffener on the foam, and the foam is interposed between the deformable stiffener and the surface of the fabric.

In accordance with an aspect of the invention, a head-mounted device is provided that includes a housing, a display in the housing and a nosepiece coupled to the housing and configured to shield light, the nosepiece includes an elastomeric layer with a plurality of perforations.

Preferably, the elastomeric layer includes a material selected from the group consisting of: thermoplastic polyurethane, nitrile butadiene rubber, and silicone, and the plurality of perforations are staggered in a brick pattern across a surface of the elastomeric layer.

Preferably, the nosepiece further includes a structural frame that is coupled to the elastomeric layer.

In accordance with an aspect of the invention, a head-mounted device is provided that includes a housing, a display in the housing and a light-shielding nosepiece including first and second fabric layers, the first and second fabric layers are bonded together.

Preferably, the first and second fabric layers are bonded together at an array of points that extends across the first and second fabric layers.

Preferably, the light-shielding nosepiece further includes an elastomeric layer having a plurality of perforations and a stiffener, the first and second fabric layers surround the elastomeric layer.

Preferably, the stiffener is surrounded by the first and second fabric layers, and the stiffener is a deformable stiffener that is adjustable to adjust the light-shielding nosepiece structure.

The foregoing is merely illustrative and various modifications can be made to the described embodiments. The foregoing embodiments may be implemented individually or in any combination.

## Claims

1. A head-mounted device, comprising:
a housing;
a display in the housing; and
a light-shielding nosepiece comprising first and second fabric layers, wherein the first and second fabric layers are bonded together.

2. The head-mounted device defined in claim 1, wherein the first and second fabric layers are bonded together at an array of points that extends across the first and second fabric layers.

3. The head-mounted device defined in claim 1 or claim 2, wherein the light-shielding nosepiece further comprises an elastomeric layer having a plurality of perforations and a stiffener, wherein the first and second fabric layers surround the elastomeric layer.

4. The head-mounted device defined in any preceding claim, further comprising a deformable stiffener, wherein the deformable stiffener is adjustable to adjust the light-shielding nosepiece.

5. The head-mounted device defined in claim 4, wherein the deformable stiffener is surrounded by the first and second fabric layers.

6. The head-mounted device defined in any preceding claim, wherein the elastomeric layer comprises thermoplastic polyurethane.

7. The head-mounted device defined in any preceding claim wherein the elastomeric layer comprises multiple perforations that are staggered in a brick pattern across the elastomeric layer.

8. The head-mounted device defined in claim 7, wherein the multiple perforations comprise slits.

9. The head-mounted device defined in claim 7, wherein the multiple perforations comprise three-part openings.

10. The head-mounted device defined in claim 7, wherein the multiple perforations comprise slits and three-part openings.

11. The head-mounted device defined in any of claims 3-10, wherein the elastomeric layer has a periphery, and the first and second fabric layers are coupled to the elastomeric layer at the periphery.

12. The head-mounted device defined in any of claims 3-11, wherein the first and second fabric layers surround the elastomeric layer without attaching to the elastomeric layer.

13. The head-mounted device defined in any of claims 3-12, wherein the light seal further comprises a structural frame that is coupled to the elastomeric layer and to the first and second fabric layers.

14. The head-mounted device defined in any of claim 3-13, wherein the light-shielding nosepiece further comprises foam interposed between the elastomeric layer and one of the first or second fabric layers.

15. The head-mounted device defined in any preceding claim, wherein the light-shielding nosepiece further comprises a service loop, the fabric covers the service loop, and the service loop is adjustable to adjust the light-shielding nosepiece.
